# EUROPÄISCHE PATENTSCHRIFT

(11) **EP 0 776 917 B1**
(45) Veröffentlichungstag und Bekanntmachung des Hinweises auf die Patenterteilung: **29.05.2002**
(21) Anmeldenummer: 96810812.6
(22) Anmeldetag: 20.11.1996
(51) Int. Cl.: C08F 291/02, C08L 51/04, C08L 63/00, C08F 279/02

(54) **Core/Shell-Partikel und diese enthaltende härtbare Epoxidharzzusammensetzungen**
Core/Shell particles and epoxy resin compositions containing them
Particules de polymère à structure core-shell et compositions de résines époxydes les contenant

(30) Priorität: 29.11.1995 CH 338795
(43) Veröffentlichungstag der Anmeldung: 04.06.1997
(73) Patentinhaber: Vantico AG, 4057 Basel (CH)
(72) Erfinder: Tang, Qian, 4104 Oberwil (CH); Roth, Martin, 4434 Hölstein (CH); Behm, Dean Tallak, 4132 Muttenz (CH); Mayer, Carl Walter, 4125 Riehen (CH); Petschel, Klaus, 79639 Grenzach-Wyhlen (DE); Eldin, Sameer Hosam, 1784 Courtepin (CH)
(74) Vertreter: Dannappel, Hans-Jochen, Dr.

(56) Entgegenhaltungen:
- EP-A- 0 390 144
- EP-A- 0 552 799
- US-A- 3 856 883
- US-A- 4 351 875
- US-A- 4 393 172
- US-A- 5 290 857
- US-A- 5 332 781
- US-A- 5 457 156

## Beschreibung

Die vorliegende Erfindung betriff neue Core/Shell-Partikel aus einem elastomeren Kern (Core) und einer darauf aufgepfropften Schale (Shell) aus einem vernetzen Polymer, Epoxidharzzusammensetzungen enthaltend die neuen Core/Shell-Partikel und die aus den Epoxidharzzusammensetzungen durch Härtung hergestellten Beschichtungen oder Formstoffe.

Es ist bekannt, beispielsweise aus EP-A-0 578 613, dass man durch Zusatz von Core/Shell-Partikeln, deren Kern aus einem gummiartigen Material besteht, zu härtbaren Epoxidharzzusammensetzungen die mechanischen Eigenschaften der gehärteten Epoxidharze beträchtlich verbessern kann, inbesondere erhält man Verbesserungen bei der Biege- und Schlagfestigkeit. Diese konventionellen Core/Shell-Partikel bestehen im Prinzip aus einem vernetzten unlöslichen Kern, auf den mittels in der Polymerchemie bekannten Verfahren eine nichtvemetzte oder schwach vernetzte Schale (Shell) aufgepfropft wird. Die aus dem Pfropfpolymer bestehende Schale weist im Vergleich zum Kern eine erhöhte Glastemperatur auf. Typischerweise beträgt die Glastemperatur des Kerns < 0°C und diejenige der Schale > 25°C. Nach der Härtung des Epoxidharzes mit den üblichen Härtungsmitteln liegen diese Core/Shell-Partikel als separate, diskontinuierliche Phase im Epoxidharz vor. Eine wichtige Eigenschaft der die Schale bildenden Pfropfpolymeren ist ihre Verträglichkeit mit dem Epoxidharz, die zum Beispiel durch Quellbarkeit der Schale im Epoxidharz bewirkt wird. Während einerseits die Quellbarkeit der Schale im Epoxidharz wesentlich zu einer guten Verträglichkeit mit dem Epoxidharz beiträgt, ist sie andererseits hauptverantwortlich für eine unerwünschte Viskositätserhöhung des härtbaren Epoxidharzgemisches, die die Anwendbarkeit solcher Epoxidharzzusamensetzungen erheblich einschränkt.

In der PCT-Anmeldung WO 87/00188 werden gewisse Bedenken geäussert hinsichtlich einer allzugrossen Viskositätserhöhung bei Verwendung von Core/Shell-Partikeln mit einer hochmolekularen Schale als Modifizierungsmittel für Epoxidharze.

J.Y. Qian et al. beschreiben in "The Preparation and Application of Core-Shell Latex Particles as Toughening Agents for Epoxies", 25th International SAMPE Conference, October 26-28, 1993, die Verwendung von spezifischen Core/Shell-Polymeren zur Verbesserung der Bruchzähigkeit in Epoxidharzen. Unter anderem wird auch ein Core/Shell-Polymer eingesetzt, dessen Hülle (Shell) vernetzt ist und, bezogen auf alle Comonomeren, 5 Gew.-% copolymerisiertes Divinylbenzol enthält. Im Vergleich zu den anderen verwendeten Core/Shell-Copolymeren, deren Hülle nicht vernetzt ist, wird keine Verbesserung bezüglich der Bruchfestigkeit in Epoxidharzen erzielt.

Im Journal of Applied Polymer Science, Vol. 58, Seite 439-448, (1995) werden von J.Y. Qian et al. die oben gemachten Aussagen bezüglich der Verwendung von Core/Shell-Polymeren, die in der Hülle 5 Gew.-% copolymerisiertes Divinylbenzol enthalten, bestätigt. Dort wird sogar bemerkt, dass eine vernetzte Hülle die Bruchzähigkeit negativ beeinflusst.

In der JP-Anmeldung Hei 4-297220 werden Core/Shell-Polymere, die in der Hülle bis zu 5 Gew.-% einer vernetzenden Cokomponente enthalten, transparenten Thermoplasten zwecks Verbesserung der Schlagfestigkeit und Beibehaltung der Transparenz zugesetzt.

Das U.S. Patent 4,393,172 beschreibt thermoplastische Formmassen enthaltend Core/Shell-Polymere mit einem Kern und zwei Schalen, wobei die erste Schale aus vernetzten Alkylacrylaten, Halogenalkylacrylaten oder Arylacrylaten und die zweite Schale aus Pfropfpolymeren, wie beispielsweise Styrol/Acrylnitril, besteht.

In der EP-A-552 799 werden photoempfindliche Zusammensetzungen zur Herstellung von Druckplatten offenbart, die als Binderharz Core/Shell-Polymere enthalten, deren Schale durch Polymerisation von Alkylacrylaten in Gegenwart von polyfunktionellen Monomeren, wie z.B. Ethylenglykoldimethacrylat, hergestellt werden.

Das U.S. Patent 4,351,875 beschreibt eine härtbare Latex-Zusammensetzung enthaltend Core/Shell-Partikel mit teilvernetztem Kern und einer Schale aus (Meth)acrylat-Polymeren mit einer Glasübergangstemperatur von -10 °C bis +60 °C zur Behandlung von Textilfasern. Das Monomergemisch zur Herstellung der Schale enthält latente Vernetzer, d.h. Verbindungen mit einer Doppelbindung und weiteren funktionellen Gruppen, wie z.B. Acrylamid oder N-Methylolacrylamid, die die Assoziation der Schale mit dem Kern gewährleisten.

Das U.S. Patent 3,856,883 schlägt vor, duroplastischen Harzen zur Erhöhung der Schlagzähigkeit bestimmte Core/Shell-Polymere zuzusetzen, deren Kern aus vernetztem Polyalkylacrylat besteht und deren Schale durch Polymerisation von Methylmethacrylat und weiteren Comonomeren, gegebenenfalls in Gegenwart von geringen Mengen eines Vernetzers, hergestellt wird.

Es wurde nun überraschend gefunden, dass man bei der Verwendung von bestimmten Core/Shell-Partikeln, welche eine Schale aus einem relativ hochvernetzten Polymer aufweisen, insbesondere bei der Anwendung mit Epoxidharzen Vorteile bei der Verarbeitung erhält, da die neuen Core/Shell-Copolymeren die Viskosität der flüssigen oder geschmolzenen Epoxidharze nicht wesentlich erhöhen. Durch die auf diese Weise modifizierten Epoxidharzzusammensetzungen sind einfachere Anwendungsbedingungen und breitere Anwendungsmöglichkeiten gegeben.

Gegenstand vorliegender Erfindung sind somit neue Core/Shell-Partikel aus einem Kern (Core), bestehend aus einem Elastomeren mit einem T_{G}-Wert von < 0°C, auf den eine Schale (Shell) aus einem vernetzten Copolymer enthaltend mindestens ein von Polyethylenglykol oder Polypropylenglykol abgeleitetes (Meth)acrylat der Formel I 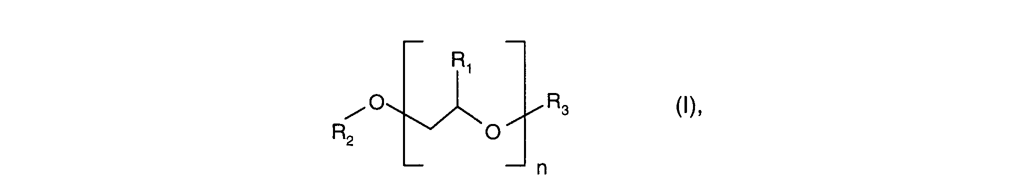 worin entweder R₂ oder R₃ für den Rest 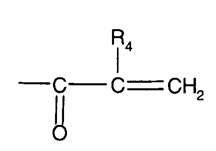 steht und der andere Rest -H oder ein Alkyl bedeutet, R₁ oder R₄ je für -H, -CH₃ oder -C₂ H₅ stehen und n eine Zahl von 2 bis 30 bedeutet,
aufgepfropft ist, wobei der Anteil der Vernetzungskomponente im Copolymer der Schale mehr als 5 und höchstens 90 Gew.-%, bezogen auf die gesamte Menge der Comonomeren des Schalencopolymers, beträgt.

Der ein Elastomer enthaltende Kern der erfindungsgemässen Core/Shell-Partikel kann beispielsweise aus einem Polybutadien, Polybutadienderivat, Polyisopren, Polychlorisopren, Silikonkautschuk, Polysulfid, Poly(meth)acrylsäureester sowie deren Co- oder Terpolymere mit Styrol oder Acrylnitril bestehen. Solche Elastomere sind bekannt und auch im Handel erhältlich, beispielsweise ein Polybutadienlatex unter der Bezeichnung Baystal®S Polybutadien (Bayer AG).
Vorzugsweise besteht der Kern der erfindungsgemässen Core/Shell-Partikel aus einem vernetzten Elastomeren, wie beispielsweise Polybutadien, Poly(meth)acrylsäureester oder deren Co- oder Terpolymere mit Styrol, mit einem T_{G}-Wert von < -10°C.

Insbesondere besteht der Kern der erfindungsgemässen Core/Shell-Partikel aus einem Polybutadien oder Poly(meth)acrylat.

In den erfindungsgemässen Core/Shell-Partikeln beträgt die Menge der Kerns, bezogen auf die gesamten Core/Shell-Partikel, im allgemeinen 10-90 Gew.-%, vorzugsweise 20-80 Gew.-%, insbesondere 30-70 Gew.-%.

Die Schale der erfindungsgemässen Core/Shell-Partikel besteht aus einem vernetzten Copolymer auf der Basis von Vinylmonomeren, die funktionelle Gruppen, wie beispielsweise Glycidyl-, Hydroxyalkyl-, Amino- oder Amidgruppen,enthalten können, und auf der Basis von polyfunktionellen (Meth)acrylsäurestern aliphatischer Polyole, Bisphenoldiglycidylether-di(meth)acrylaten, Di(meth)acrylaten von ethoxylierten Bisphenolen, Additionsprodukten von (Meth)acrylsäure an von Bisphenoldiglycidylethern verschiedenen Di- oder Polyepoxid- verbindungen, von (Meth)acrylsäureallylester oder Divinylbenzol als Vernetzungskompo- nente und Comonomer. Es können auch Gemische der diversen Vinylmonomeren und der Vernetzungskomponenten verwendet werden.

Als Vinylmonomere eignen sich beispielsweise Acrylsäure, Methacrylsäure und deren Derivate, wie beispielsweise (Meth)acrylsäureester, epoxidgruppenhaltige (Meth)acrylsäureester, wie zum Beispiel Glycidyl(meth)acrylat, hydroxygruppenhaltige (Meth)acryläureester, wie zum Beispiel Hydroxyethyl- oder Hydroxypropyl(meth)acrylsäurester, amidgruppenhaltige Monomere, wie zum Beispiel (Meth)acrylsäureamide, aminogruppenhaltige Monomere, wie zum Beispiel Dimethylaminoethyl(meth)acrylat, oder Vinylpyridin, Styrol , Vinylether oder Acrylnitril.

Vorzugsweise verwendet man als Vinylmonomere (Meth)acrylsäure, (Meth)acrylsäureester, Styrol, Acrylnitril oder Glycidyl(meth)acrylat.

Als Vernetzungskomponente, das heisst Monomere, die mindestens zwei Vinylgruppen im Als Vernetzungskomponente, das heisst Monomere, die mindestens zwei Vinylgruppen im Molekül enthalten, eignen sich auch Gemische aus mindestens zwei Vinylmonomeren, die über eine funktionelle Gruppe bei der Herstellung der Schale miteinander reagieren können, wie beispielsweise Mischungen aus (Meth)acrylsäure und Glycidylmethacrylat.

Vorzugsweise werden zur Herstellung der Schale der erfindungsgemässen Core/Shell-Partikel als Vernetzungskomponente Di(meth)acrylate von Ethylenglykol, Propylenglykol, Butylenglykol oder deren höheren Homologe mit bis zu 30 wiederkehrenden Struktureinheiten der Formel 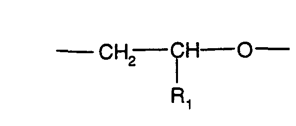 im Molekül, worin R¹ für -H, -CH₃ oder -C₂H₅ stehtt, ferner 1,1,1-Trimethylolpropan-tri(meth)acrylat, Bisphenol A-diglycidylether-di(meth)acrylat oder Methacrylsäureallylester eingesetzt.

Insbesondere wird als Vernetzungskomponente bei der Herstellung der Schale Ethylenglykoldi(meth)acrylat und dessen höhere Homologen eingesetzt.

In den erfindungsgemässen Core/Shell-Partikeln beträgt die Menge der Schale, bezogen auf die Core/Shell-Partikel im allgemeinen 90-10 Gew.-%, vorzugsweise 80-20 Gew.-%, insbesondere 70-30 Gew.-%.

In der Schale selbst beträgt der Mengenanteil der Vernetzungskomponente vorzugsweise 6-60 Gew.-%, insbesondere 10-50 Gew.-%, bezogen auf die gesamte Menge der Comonomeren des Schalenpolymers.

Die erfindungsgemässen Core/Shell-Partikel werden nach an sich bekannten Methoden hergestellt. Bevorzugt ist die Herstellung als Emulsionspolymerisat in einem wässrigen Medium. Dabei wird zuerst der Kern als Emulsionspolymerisat hergestellt und dann eine Schale aufgepfropft. Nach der Polymerisation liegen die Core/Shell-Partikel als wässriger Latex vor. Diese können entweder als Latex weiterverarbeitet werden, in fester Form mittels beispielsweise Sprühtrocknung oder Lyophilisation isoliert oder durch Lösungsmittelaustausch in einem organischen Lösungsmittel dispergiert werden,.

Die Grösse der Core/Shell-Partikel kann in weiten Grenzen variieren und liegt im allgemeinen zwischen 0,05 bis 30 µm.

Wie eingangs erwähnt, eignen sich die erfindungsgemässen Core/Shell-Partikel vorzugsweise als Zähigkeitsvermittler für Epoxidharze, da diese mit den Epoxidharzen stabile Epoxidharzdispersionen mit einer tiefen Viskosität ergeben und damit verbesserte Verarbeitungseigenschaften aufweisen.

Gegenstand vorliegender Erfindung sind somit auch Epoxidharzzusammensetzungen, enthaltend
(a) ein Epoxidharz oder Epoxidharzgemisch mit durchschnittlich mehr als einer 1,2-Epoxidgruppe im Molekül,
(b) Core/Shell-Partikel aus einem Kern (Core), bestehend aus einem Elastomeren mit einem T_{G}-Wert von < 0°C, auf den eine Schale (Shell) aus einem vernetzten Copolymer enthaltend mindestens ein von Polyethylenglykol oder Polypropylenglykol abgeleitetes (Meth)acrylat der Formel I 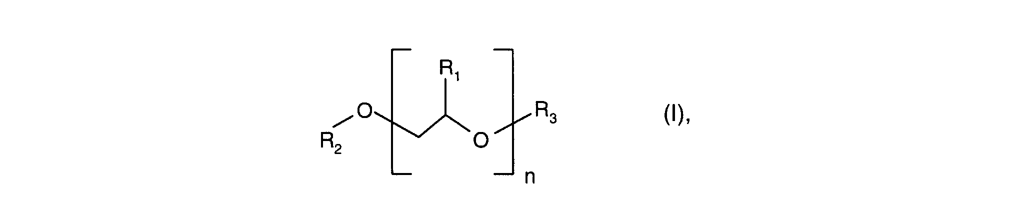 worin entweder R₂ oder R₃ für den Rest 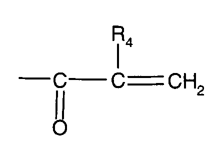 steht und der andere Rest -H oder ein Alkyl bedeutet, R₁ oder R₄ je für -H, -CH₃ oder -C₂ H₅ stehen und n eine Zahl von 2 bis 30 bedeutet,
   aufgepfropft ist, wobei der Anteil der Vernetzungskomponente im Copolymer der Schale mehr als 5 und höchstens 90 Gew.-%, bezogen auf die gesamte Menge der Comonomeren des Schalencopolymers, beträgt, und
(c) ein Härtungsmittel oder einen Härtungskatalysator für die Epoxidharzkomponente (a).

Für die Herstellung der erfindungsgemässen Epoxidharzzusammensetzungen eignen sich als Epoxidharze (a) die in der Epoxidharztechnik üblichen Epoxidharze. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
   Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan.
   Die Glycidylether können sich auch von einkemingen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)-methan, m-Xylylendiamin oder Bis-(4-methylaminophenyl)-methan.
   Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether ableiten.
V) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das NN,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1 ,3-bis-(5,5-dimethyl-1-glycidylhydantoin-3-yl)-propan. Bevorzugt verwendet man zur Herstellung der erfindungsmässen Epoxidharzzusammensetzungen einen flüssigen oder festen Polyglycidylether oder -ester, insbesondere einen flüssigen oder festen Bisphenoldiglycidylether oder einen festen oder flüssigen Diglycidylester einer cycloaliphatischen oder aromatischen Dicarbonsäure, oder ein cycloaliphatisches Epoxidharz. Es können auch Gemische von Epoxidharzen verwendet werden.

Als feste Polyglycidylether und -ester kommen Verbindungen mit Schmelzpunkten oberhalb Raumtemperatur bis etwa 250°C in Betracht. Bevorzugt liegen die Schmelzpunkte der festen Verbindungen im Bereich von 50 bis 150°C. Solche festen Verbindungen sind bekannt und zum Teil im Handel erhältlich. Als feste Polyglycidylether und -ester können auch die durch Vorverlängerung von flüssigen Polyglycidylethern und -estern erhaltenen Advancement-Produkte verwendet werden.

Insbesondere enthalten die erfindungsgemässen Epoxidharzzusammensetzungen einen flüssigen Polyglycidylether oder -ester.

Die erfindungsgemässen Epoxidharzzusammensetzungen enthalten als Komponente (b) vorzugsweise solche Core/Shell-Partikel, worin der Kern aus einem vernetzten Elastomeren, wie beispielsweise Polybutadien, Poly(meth)acrylsäureester oder deren Cooder Terpolymere mit Styrol, mit einem T_{G}-Wert von < -10°C besteht.

Inbesondere enthalten die erfindungsgemässen Epoxidharzzusammensetzungen Core/Shell-Partikel, worin der Kern aus einem Polybutadien oder Poly(meth)acrylat besteht.

Ferner sind als Komponente (b) solche Core/Shell-Partikel bevorzugt, die eine Schale aus einem vernetzten Copolymer aufweisen, worin der Anteil an der Vernetzungskomponente im Copolymer 6-60 Gew.-%, insbesondere 10-50 Gew.-%, bezogen auf die gesamte Menge des Schalenpolymers, beträgt.

Als Komponente (b) sind ausserdem solche Core/Shell-Partikel bevorzugt, worin die Schale aus einem vernetzen Copolymer auf der Basis von Vinylmonomeren, die funktionelle Gruppen enthalten können, und auf der Basis von polyfunktionellen (Meth)acrylsäurestern aliphatischer Polyole, Bisphenoldiglycidylether-di(meth)acrylaten, Di(meth)acrylaten von ethoxylierten Bisphenolen, Additionsprodukten von (Meth)acrylsäure an von Bisphenoldiglycidylethern verschiedenen Di- oder Polyepoxidverbindungen, von (Meth)acrylsäureallylester oder Divinylbenzol als Vernetzungskomponenten und Comonomeren besteht.

Vorzugsweise enthält die Schale Core/Shell-Partikel aus einem vernetzten Copolymer auf der Basis der Vinylmonomeren (Meth)acrylsäure, (Meth)arcylsäureester, Styrol, Acrylnitril oder Glycidyl(meth)acrylat.

Ganz besonders enthält die Schale der Core/Shell-Partikel ein vernetztes Copolymer, das die Di(meth)acrylate von Ethylenglykol, Propylenglykol, Butylenglykol oder deren höheren Homologe mit bis zu 30 wiederkehrenden Struktureinheiten der Formel 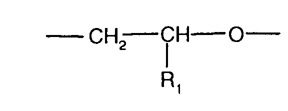 im Molekül, worin R¹ für -H, -CH₃ oder -C₂H₅ steht, oder 1,1,1-Trimethylolpropan-tri(meth)acrylat, Bisphenol A-diglycidylether-di(meth)acrylat oder Methacrylsäureallylester als Vernetzungskomponente enthält.

Vorzugsweise beträgt der Anteil an der Komponente (b) 1-50 Gew.%, bevorzugt 5-30 Gew.-%, insbesondere 5-25 Gew.-%.

Als Härtungsmittel (c) können die erfindungsgemässen Epoxidharzzusammensetzungen die üblichen in der Epoxidharztechnik verwendeten Härtungsmittel enthalten, wie beispielsweise Polycarbonsäuren und deren Anhydride, Polyamine, Polyaminoamide, aminogruppenhaltige Addukte, aliphatische oder aromatische Polyole oder katalytisch wirkende Härtungsmittel.

Als geeignete Polycarbonsäuren seien beispielsweise genannt: Aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure; cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure sowie die Anhydride der genannten Polycarbonsäuren.

Als Polyamine können für die Härtung aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylen-diamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, N,N-Dimethyl- und N,N-Diethylpropan-1,3-diamin, Ethanolamin, m- und p-Phenylendiamin , Bis-(4-aminophenyl)-methan, Anilin-Formaldehyd-Harz, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren.

Als Polyaminoamide eignen sich beispielsweise die durch Umsetzung von Polycarbonsäuren, vorzugsweise von dimerisierten Fettsäuren, mit Polyaminen im molaren Überschuss erhaltenen Reaktionsprodukte, wie sie beispielsweise im Handbook of Epoxy Resins, 1967, Seiten 10-2 bis 10-10, von H. Lee und K. Neville beschrieben werden. Aminogruppenhaltige Addukte aus einem Amin und einer Polyepoxidverbindung als Härtungsmittel für Epoxidharze sind ebenfalls bekannt und können für die Härtung der erfindungsgemässen Epoxidharzzusammensetzungen eingesetzt werden und werden beispielsweise durch Umsetzung von Epoxidharzen mit Polyaminen im äquivalenten Überschuss erhaltenen. Solche aminogruppenhaltige Addukte werden beispielsweise in den US-Patenten 3,538,184; 4,330,659; 4,500,582 und 4,540,750 näher beschrieben.

Als aliphatische Polyole für die Härtung der erfindungsgemässen Epoxidharzzusammensetzungen eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit, Sorbit, N,N-Bis-(2-hydroxyethyl)-anilin oder p,p'-Bis-(2-hydroxyethylamino)-diphenylmethan.
Als aromatische Polyole können für die Härtung beispielsweise einkernige Phenole, wie Resorcin, Hydrochinon, oder mehrkernige Phenole, wie Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art, eingesetzt werden.

Es können auch katalytisch wirkende Härtungsmittel zur Härtung der erfindungsgemässen Epoxidharzzusammensetzungen verwendet werden, wie tertiäre Amine, beispielsweise 2,4,6-Tris-(dimethylaminomethyl)-phenol und andere Mannichbasen, N-Benzyldimethylamin und Triethanolamin; Alkalimetallalkoxide von Alkoholen, beispielsweise Na-alkoholat von 2,4-Dihydroxy-3-hydroxymethylpentan; Zinnsalze von Alkansäuren, beispielsweise Zinnoctanoat; Friedel-Crafts-Katalysatoren, beispielsweise Bortrifluorid und seine Komplexe, beispielsweise Bortrifluorid-Amin-Komplexe, und Chelate, die durch Umsetzung von Bortrifluorid mit zum Beispiel 1,3-Diketonen erhalten werden, Sulfoniumsalze, wie sie beispielsweise im EP-Patent 0 379 464 oder US-Patent 5,013.814, im EP-Patent 0 580 552 oder US-Patent 5,374,697 offenbart werden, oder
heterocylische Ammoniumsalze, zum Beispiel Chinoliniumsalze gemischt mit Benzpinakol, wie sie beispielsweise in EP-A-0 066 543 erwähnt sind.

Vorzugsweise verwendet man als Härtungsmittel für die erfindungsgemässen Epoxidharzzusammensetzungen eine Polycarbonsäure oder deren Anhydrid, ein Polyamin, Dicyandiamid oder ein katalytisch härtendes Härtungsmittel.

Insbesondere verwendet man als Härtungsmittel für die erfindungsgemässen Epoxidharzzusammensetzungen ein Polycarbonsäureanhydrid oder ein katalytisch härtendes Härtungsmittel, wie beispielsweise ein Sulfoniumsalz.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann vom Fachamnn leicht ermittelt werden. Wenn das Härtungsmittel ein Amin ist, werden normalerweise 0,75 bis 1,25 Äquivalenten Aminwasserstoff pro 1 Epoxidäquivalent eingesetzt. Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei Verwendung von Polyphenolen als Härtungsmittel setzt man 0,75 bis 1,25 phenolische Hydroxylgruppen pro 1 Epoxidäquivalent ein. Katalytisch wirkende Härtungsmittel werden allgemein in Mengen von 0,1 bis 40 Gewichtsteilen pro 100 Gewichtsteilen Epoxidharz eingesetzt.

Die erfindungsgemässen Epoxidharzzusammensetzungen können auch die in der Epoxidharztechnik üblichen Füllstoffe und Verstärkungsmaterilalien enthalten. Als Füllstoffe kommen beispielsweise die folgenden in Betracht: Mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit. Als Verstärkungsmaterialien eignen sich beispielsweise Glas- oder Kohlenstoffasern.

Die erfindungsgemässen Epoxidharzzusammensetzungen werden nach an sich bekannten Methoden, wie mit Hilfe bekannter Mischaggregate, beispielsweise Rührer, Kneter, Walzen oder im Falle fester Substanzen in Trockenmischern, hergestellt.

Die Härtung der erfindungsgemässen Epoxidharzzusammensetzungen zu Formkörpern, Beschichtungen oder dergleichen erfolgt in für die Epoxidharztechnik üblicher Weise, wie sie beispielsweise im "Handbook of Epoxy Resins", 1967, von H. Lee und K.Neville beschrieben wird.

Die erfindungsgemässen Epoxidharzzusammensetzugen eignen sich ausgezeichnet als Giessharze, Laminierharze, Klebstoffe, Pressmassen, Beschichtungsmassen sowie als Umhüllungssysteme für elektrische und elektronische Bauteile, vorzugswe ise als Umhüllungssysteme oder Beschichtungsmassen sowie Giessharze, Laminierharze oder Klebstoffe.

Insbesondere eignen sich die erfindungsgemässen Epoxidharzzusammensetzungen als Umhüllungssysteme oder als Beschichtungsmassen, beispielsweise für Stromumwandler oder elektrische Isolatoren, die gute Schlagfestigkeiten und Bruchzähigkeiten im Mittel- und insbesondere im Hochspannungsbereich erfordern. Dafür bevorzugt sind Umhüllungssysteme oder Bschichtungsmassen, enthaltend
(a) ein Epoxidharz oder Epoxidharzgemisch mit durchschnittlich mehr als einer 1,2-Epoxidgruppe im Molekül,
(b) Core/Shell-Partikel aus einem Kern (Core), bestehend aus einem Elastomeren mit einem T_{G}-Wert von < 0°C, auf den eine Schale (Shell) aus einem vernetzten Copolymer enthaltend mindestens ein von Polyethylenglykol oder Polypropylenglykol abgeleitetes (Meth)acrylat der Formel I 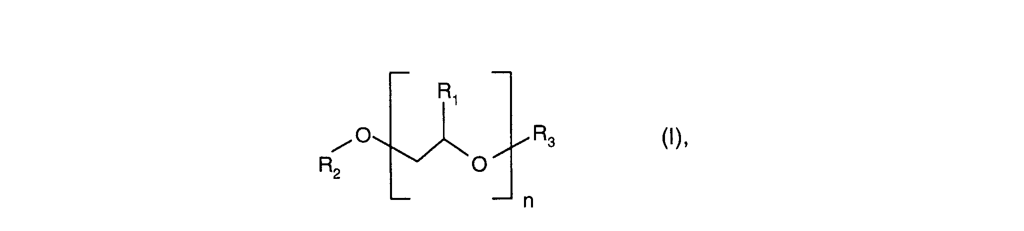 worin entweder R₂ oder R₃ für den Rest 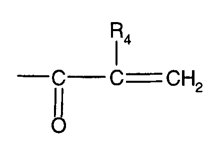 steht und der andere Rest -H oder ein Alkyl bedeutet, R₁ oder R₄ je für -H, -CH₃ oder -C₂H₅ stehen und n eine Zahl von 2 bis 30 bedeutet,
   aufgepfropft ist, wobei der Anteil an der Vernetzungskomponente im Copolymer der Schale mehr als 5 und höchstens 90 Gew.-%, bezogen auf die gesamte Menge der Comonomeren des Schalencopolymers, beträgt,
(c) ein Härtungsmittel oder einen Härtungskatalysator für die Epoxidharzkomponente (a) und
(d) mindestens einen in der Epoxidharztechnik gebräuchlichen mineralischen Füllstoff.

Der Gewichtsanteil an Core/Shell-Partikeln in den erfindungsgemässen Umhüllungssystemen oder Beschichtungsmassen beträgt vorzugsweise 5 bis 20 Gew.-%, bezogen auf die Menge an Epoxidharz (a).

Die Grösse der Core/Shell-Partikeln in den erfindungsgemässen Umhüllungssystemen oder Bschichtungsmassen ist vorzugsweise nicht grösser als 30 µm.

Als Beispiele für in der Epoxidharztechnick gebräuchliche mineralische Füllstoffe seien beispielsweise genannt: Quarzmehl, Quarzgut, Aluminiumoxid, Titandioxid, Glimmer, Kaolin, Dolomit und Graphit. Weitere in der Epoxidharztechnik gebräuliche Füllstoffe sind beispielsweise Russ, Glaspulver, Kohlefasern, Glasfasern und Textilfasern. Der Anteil an diesen Füllstoffen beträgt im allgemeinen 40 bis 80 Gew.-%, bezogen auf das Gesamtgewicht der erfindungsgemässen Umhüllungssystemen oder Beschichtungsmassen. Die obere Grenze des Füllstoffanteils wird durch die Verarbeitbarkeit der Epoxidharzzusammensetzungen, insbesondere als giessfähige Epoxidharzzusammensetzung, bestimmt.

Die Füllstoffe in den erfindungsgemässen Umhüllungssytemen oder Beschichtungsmassen weisen vorzugsweise eine Partikelgrösse von nicht grösser als 250 µm auf.

In einer besonders bevorzugten Ausführungsform verwendet man die erfindungsgemässen Epoxidharzzusammensetzungen als Giessharzmassen zur Herstellung von Giessformkörpern, wie beispielsweise Tröge, Duschtassen, Platten mit tragenden Funktionen, Apparategehäuse oder Ventilteile.

Gegenstand vorliegender Erfindung sind somit auch Epoxidgiessharzmassen, enthaltend
(a) ein Epoxidharz oder Epoxidharzgemisch mit durchschnittlich mehr als einer 1,2-Epoxidgruppe im Molekül,
(b) Core/Shell-Partikel aus einem Kern (Core), bestehend aus einem Elastomeren mit einem T_{G}-Wert von < 0°C, auf den eine Schale (Shell) aus einem vernetzten Copolymer enthaltend mindestens ein von Polyethylenglykol oder Polypropylenglykol abgeleitetes (Meth)acrylat der Formel I 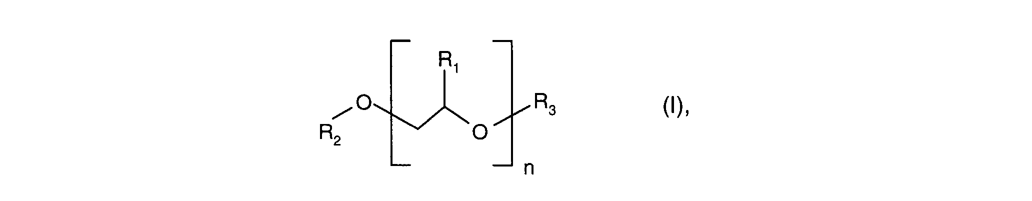 worin entweder R₂ oder R₃ für den Rest 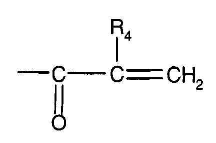 steht und der andere Rest -H oder ein Alkyl bedeutet, R₁ oder R₄ je für -H, -CH₃ oder -C₂H₅ stehen und n eine Zahl von 2 bis 30 bedeutet,
   aufgepfropft ist, wobei der Anteil der Vernetzungskomponente im Copolymer der Schale mehr als 5 und höchstens 90 Gew.-%, bezogen auf die gesamte Menge der Comonomeren des Schalencopolymers, beträgt,
(c) ein Härtungsmittel oder einen Härtungskatalysator für die Epoxidharzkomponente (a) und
(d) mindestens einen in der Epoxidgiessharztechnik gebräuchlichen mineralischen Füllstoff.

Als Beispiele für in der Epoxidgiessharztechnick gebräuchliche mineralische Füllstoffe seien beispielsweise genannt: Quarzmehl, Quarzgut, Aluminiumoxid, Titandioxid, Glimmer, Kaolin, Dolomit, Graphit, Granit, Sand und diverse partikuläre, mineralische Zuschlagstoffe. Weitere in der Epoxidgiessharztechnik gebräuliche Füllstoffe sind beispielsweise Russ, Glaspulver, Kohlefasern, Glasfasern und Textilfasern. Der Anteil an diesen Füllstoffen beträgt im allgemeinen 40 bis 85 Gew.-%, bezogen auf das Gesamtgewicht der erfindungsgemässenGiessharzmassen. Die obere Grenze des Füllstoffanteils wird durch die Verwendbarkeit als Epoxidgiessharzmasse bestimmt.

Ferner enthalten die erfindungsgemässen Epoxidgiessharzmassen vorzugsweise noch Farbstoffe und/oder Pigmente.

Gegenstand vorliegender Erfindung sind auch die aus den erfindungsgemässen Epoxidharzzusammensetzungen hergestellten Formstoffe, Beschichtungen oder Verklebungen.

In den folgenden Beispielen werden für die eingesetzen Substanzen folgende Abkürzungen verwendet:

| | |
|---|---|
| Polybutadienlatex | PBdL |
| n-Butylacrylat | BA |
| Methylmethacrylat | MMA |
| Acrylnitril | AN |
| Glycidylmethacrylat | GMA |
| Ethylenglycoldimethacrylat | EGDMA |
| tert.-Dodecylmercaptan | t-DM |
| Ammoniumpersulfat | APS |
| Natriumdodecylsulfat | SDS |
| 1-Methylimidazol | Melm |
| Benzyldimethylamin | BDMA |
| Quarzmehl | QM |
| Deionisiertes Wasser | Di-Wasser |

### Herstellung eines Core-Shell Polymers

### Beispiel A (Vergleich):

51,2 g PBdL (Baystal® S Polybutadien 2004, Bayer AG) mit einem Festkörpergehalt von 59 Gew.-% und 98,8 g Di-Wasser werden in einem 350 ml Sulfierkolben, der mit Glasankerrührer, Thermometer, Gasanschluss und zwei Dosierungsanschlüssen ausgerüstet ist, unter Stickstoff vorgelegt und gerührt. Das Gemisch wird auf 80°C (Innentemperatur) aufgeheizt. Die folgende Monomermischung und Initiator/Emulgatorlösung werden während 50 Minuten (min) zudosiert.

| **Monomermischung** | | **Initiator/Emulgatorlösung** | |
|---|---|---|---|
| MMA | 24 g | APS | 0,15 g |
| EGDMA | 6 g | SDS | 0.5 g |
| | | Di-Wasser | 30 g |

Nach der Zugabe wird während weiteren 2 Stunden (h) bei 80°C nachgerührt und polymerisiert. Die Reaktionsemulsion wird dann auf Raumtemperatur (RT) abgekühlt und durch ein Papierfilter filtriert. Die so erhaltene Emulsion mit einem Festkörpergehalt von 27 Gew.-% und Partikelgrössen von 0,5 - 1,7 µm, die nach der Fraunhoferschen Diffraktionsmethode, publiziert in Modern Methods of Particle Size Analysis, bestimmt wurden, und die im Schalenpolymer einen Anteil von 20 Gew.-% an der Vernetzungskomponente aufweisen, bezogen auf die Monomermenge des Schalenpolymers, wird als Zähigkeitsvermittler eingesetzt.

### Beispiel B:

Analog zu Beispiel A werden zum Gemisch aus 51,2 g PBdL und 98,8 g Di-Wasser die unten angegebene Monomermischung und Initiator/Emulgatorlösung zudosiert. Nach der Zugabe wird während weiteren 6 h bei 80°C nachgerührt und polymerisiert. Festkörpergehalt: 26,8
Gew.-%. Mengenanteil der Vernetzungskomponente in der Schale: 15 Gew.-%.

| **Monomermischung** | | **Initiator/Emulgatorlösung** | |
|---|---|---|---|
| MMA | 21 g | APS | 0,15g |
| EGDMA | 4,5 g | SDS | 0.5 g |
| Bisomer PPM6E *⁾ | 4,5 g | Di-Wasser | 30 g |
| t-DM | 0,15 g | | |

| | | | |
|---|---|---|---|
| *⁾ Bisomer PPM6E ist ein Polypropylenglykolmonomethacrylat mit durchschnittlich 6 Propylenglykoleinheiten, erhältlich von British Petroleum. | | | |

### Beispiel C (Vergleich):

Analog zu Beispiel A werden zum Gemisch aus 51,2 g PBdL und 98,8 g Di-Wasser die unten angegebene Monomermischung und Initiator/Emulgatorlösung zudosiert. Nach der Zugabe wird während weiteren 6 h bei 80°C nachgerührt. Festkörpergehalt: 28,0%. Mengenanteil der Vernetzungskomponente in der Schale: 15 Gew.-%.

| **Monomermischung** | | **Initiator/Emulgatorlösung** | |
|---|---|---|---|
| MMA | 21 g | APS | 0,15g |
| EGDMA | 4,5 g | SDS | 0.5 g |
| AN | 4,5 g | Di Wasser | 30 g |
| t-DM | 0,15 g | | |

### Beispiel D (Vergleich):

Analog zu Beispiel A werden zum Gemisch aus 51,2 g PBdL und 98,8 g Di-Wasser die unten angegebene Monomermischung und Initiator/Emulgatorlösung zudosiert. Nach der Zugabe wird während weiteren 6 h bei 80°C nachgerührt. Festkörpergehalt: 26,6% Gew.-%. Mengenanteil der Vernetzungskomponente in der Schale: 15 Gew.-%.

| **Monomermischung** | | **Initiator/Emulgatorlösung** | |
|---|---|---|---|
| MMA | 27 g | APS | 0,15 g |
| Sartomer 350 *⁾ | 3 g | SDS | 0.5 g |
| t-DM | 0,15 g | Di-Wasser | 30 g |

| | | | |
|---|---|---|---|
| *⁾ Sartomer 350 besteht aus Trimethylolpropantrimethacrylat | | | |

### Beispiel E (Vergleich):

Analog zu Beispiel A werden zum Gemisch aus 51,2 g PBdL und 98,8 g Di-Wasser die unten angegebene Monomermischung und Initiator/Emulgatorlösung zudosiert. Nach der Zugabe wird während weiteren 6 h bei 80°C nachgerührt. Festkörpergehalt: Gew.-28,6%. Mengenanteil der Vernetzungskomponente in der Schale: 15 Gew.-%.

| **Monomermischung** | | **Initiator/Emulgatorlösung** | |
|---|---|---|---|
| MMA | 21 g | APS | 0,15 g |
| EGDMA | 4,5 g | SDS | 0.5 g |
| GMA | 4,5 g | Di-Wasser | 30 g |
| t-DM | 0,15 g | | |

### Beispiel F:

Analog zu Beispiel A werden zum Gemisch aus 51,2 g PBdL und 98,8 g Di-Wasser die unten angegebene Monomermischung und Initiator/Emulgatorlösung während 2 h zudosiert. Nach der Zugabe wird während weiteren 6 h bei 80°C nachgerührt und polymerisiert. Festkörpergehalt: 26,5% Gew. Mengenanteil der Vernetzungskomponente in der Schale: 15 Gew.-%.

| **Monomermischung** | | **Initiator/Emulgatorlösung** | |
|---|---|---|---|
| MMA | 21 g | APS | 0,15 g |
| Ebecryl 600*⁾ | 4,5 g | SDS | 0.5 g |
| Bisomer PPM6E | 4,5 g | Di-Wasser | 30 g |
| t-DM | 0,15 g | | |

| | | | |
|---|---|---|---|
| *⁾ Ebecryl 600 ist ein Diacrylat des Bisphenol A-diglycidylethers | | | |

### Beispiel G:

Analog zu Beispiel A werden zum Gemisch aus 51,2 g PBdL und 98,8 g Di-Wasser die unten angegebene Monomermischung und Initiator/Emulgatorlösung während 2 h zudosiert. Nach der Zugabe wird während weiteren 6 h bei 80°C nachgerührt. Festkörpergehalt: 27,9% Gew. Mengenanteil der Vernetzungskomponente in der Schale: 15 Gew.-%.

| **Monomermischung** | | **Initiator/Emulgatorlösung** | |
|---|---|---|---|
| MMA | 21 g | APS | 0,15 g |
| Ebecryl 600 | 4,5 g | SDS | 0,5 g |
| Bisomer PPM6E | 4,5 g | Di-Wasser | 30 g |

### Beispiel H:

Analog zu Beispiel A werden zum Gemisch aus 76,8 g PBdL und 148,2 g Di-Wasser die unten angegebene Monomermischung und Initiator/Emulgatorlösung während 1,25 h zudosiert. Nach der Zugabe wird während weiteren 4,75 h bei 80°C nachgerührt. Festkörpergehalt: 28,3 Gew.-%. Mengenanteil der Vemetzungskomponente in der Schale: 6 Gew.-%.

| **Monomermischung** | | **Initiator/Emulgatorlösung** | |
|---|---|---|---|
| MMA | 35,55 g | APS | 0,45 g |
| EGDMA | 2,7 g | SDS | 1,5 g |
| Bisomer PPM6E | 6,75 g | Di Wasser | 45 g |

### Beispiel I:

70 g Di-Wasser, 19,6 g BA, 0,4 g EGDMA, 0,05 g SDS und 0,1 g APS werden in einem 350 ml Sulfierkolben, der mit Glasankerrührer, Thermometer, Gasanschluss und zwei Dosierungsanchlüssen ausgerüstet ist, unter Stickstoff vorgelegt und gerührt. Das Gemisch wird auf 70°C (Innentemperatur) aufgeheizt. Nach 0,5 h werden die unten angegebenen Kern-Monomermischung und Emulgatorlösung während 1 h zudosiert. 10 min nach dieser Zudosierung werden die unten angegebenen Schale-Monomermischung und Emulgatorlösung während 1 h zudosiert. Nach 0,5 h wird eine Lösung von 0,03 g APS in 1 g Di-Wasser zugegeben. Nach 1 h wird wieder eine Lösung von 0,03 g APS in 1 g Di-Wasser zugegeben. Das Gemisch wird während weiteren 2 h bei 70°C nachgerührt und polymerisiert. Die Emulsion wird dann auf RT abgekühlt und durch ein Papierfilter filtriert. Die so erhaltene Emulsion mit einem Festkörpergehalt von 37,5 Gew.-% und Partikelgrössen von 0,2 - 0,7 mm, die im Schalenpolymer einen Anteil von 6 Gew.-% an Vernetzungskomponente, bezogen auf die Monomermenge des Schalenpolymers, aufweist, wird als Zähigkeitsvermittler eingesetzt.

| **Kern-Monomermischung** | | **Emulgatorlösung** | |
|---|---|---|---|
| BA | 58,8g | SDS | 0,75g |
| EGDMA | 1,2 g | Di-Wasser | 84 g |

| **Schale-Monomermischung** | | **Emulgatorlösung** | |
|---|---|---|---|
| MMA | 63,2 g | SDS | 0,75 g |
| EGDMA | 4,8 g | Di-Wasser | 84 g |
| Bisomer PPM6E | 12 g | | |

### Beispiel J:

100 g Di-Wasser, 19,6 g BA und 0,4 g EGDMA werden in einem 350 ml Sulfierkolben, der mit Glasankerrührer, Thermometer, Gasanschluss und zwei Dosierungsanchlüssen ausgerüstet ist, unter Stickstoff vorgelegt und gerüht. Das Gemisch wird auf 70°C (Innentemperatur) aufgeheizt und 5 ml einer 2 Gew.-% wässerigen Lösung von Ammoniumpersulfat (APS) werden zugegeben. Nach 0,5 h werden die unten angegebene Kern-Monomermischung und Emulgatorlösung während 1 h zudosiert. Nach dieser Zudosierung werden die unten angegebene Schale-Monomermischung während1 h zudosiert. Nach 0,5 h werden 2 ml einer Lösung von 0,03 g APS in 1 g Di-Wasser zugegeben. Nach 1 h werden wieder 5 ml einer 2 Gew.-% wässerige Lösung von APS zugegeben. Das Gemisch wird während weiteren 3 h bei 70°C nachgerührt und polymerisiert. Die Emulsion wird dann auf RT abgekühlt und durch ein Papierfilter filtriert. Die so erhaltene Emulsion mit einem Festkörpergehalt von 46 Gew.-%, die im Schalenpolymer einen Anteil von 6 Gew.-% an Vernetzungskomponente, bezogen auf die Monomermenge des Schalenpolymers, aufweist, wird als Zähigkeitsvermittler eingesetzt.

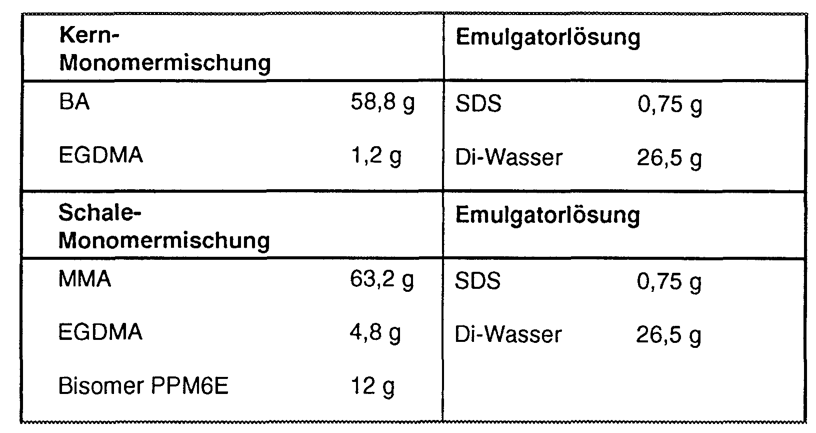

### Beispiel K:

Analog zu Beispiel A werden zum Gemisch aus 256 g PBdL und 494 g Di-Wasser die folgende Monomermischung und Initiator/Emulgatorlösung während 2 h zudosiert.

| **Monomermischung** | | **Initiator/Emulgatorlösung** | |
|---|---|---|---|
| MMA | 105g | APS | 0,75g |
| EGDMA | 22,5 g | SDS | 2,5 g |
| Bisomer PPM6E | 22,5 g | Di Wasser | 150 g |

Nach der Zugabe wird während weiteren 4 h bei 80°C nachgerührt. Die so erhaltene Emulsion weist einen Festkörpergehalt von 15 Gew.-%, der im Schalenpolymer einen Anteil von 6 Gew.-% an Vernetzungskomponente, bezogen auf die Monomermenge des Schalenpolymers, aufweist.
400 g dieser Emulsion werden mittels eines Mini Spray Dryer B 191 (Firma Büchi) sprühgetrocknet (Eingangstemperatur: 120°C, Ausgangstemperatur: 70°C, Sprühflow: 600 l/h).

### Herstellung einer Core-Shell Suspension im Epoxidharz und deren Aushärtung

### Beispiel 1:

81,48 g der gemäss Beispiel A hergestellten wässrigen Emulsion werden zu 198 g Bisphenol A-diglycidylether mit einem Epoxidgehalt von 5,4 Äquivalenten/kg zugegeben und mittels eines Rührers zusammengemischt. Das im Gemisch enthaltene Wasser wird an einem Rotationsverdampfer im Hochvakuum bei 70°C (Badtemperatur) wegdestilliert. Das restliche Wasser wird im Hochvakuum entfernt. Aus dem erhaltenen modifizierten Epoxidharz mit einer Viscosität (Brookfield) bei 40°C von 1710 mPa·s wird eine Giessharzmasse formuliert durch Zusammemischen folgender Komponenten:

| | |
|---|---|
| Modifiziertes Epoxidharz gemäss Beispiel 1. | 75 g |
| Melm | 0,02 g |
| Millisil®QM W12 *⁾ | 123,8 g |
| 15 gew.-%ige Lösung von Phenyldibenzylsulfoniumhexafluoroantimonat in Dibutylphthalat | 7,5 g |
| Byk ®A500 (Byk Chemicals) **⁾ | 2 Tropfen |

| | |
|---|---|
| *⁾ Quarzmehl der Quarzwerke AG, Frechen | |
| **⁾ Entschäumer der Firma Byk Chemicals | |

Zwecks Entfernung von eingeschlossenen Luftblasen wird die Giessharzmasse bei RT unter Hochvakuum evakuiert. Die Giessharzmasse wird in eine 13 x 13 x 0,4 cm grosse Form bei 80°C gegossen. Die Härtung erfolgt während 1 h bei 100°C und anschliessend 1 h bei 140°C.
Die mechanischen Eigenschaften werden durch die folgende Methoden geprüft:
Biegeversuch (gemäss ISO R 178/93) und Double Torsion (gemäss Ciba-Geigy-Test PM 21 6/89).***⁾

| | | |
|---|---|---|
| **Biegeversuch:** | E-Modul (MPa) | 8672 |
| | σ-Bruch (MPa) | 91 |
| **Double Torsion:** | G1c (J/m²) | 307 |
| | K1 c (MPa•m^{1/2}) | 1,71 |

***⁾ Beim Double Torsion-Test wird Bruchzähigkeit mittels einer Methode, publiziert in Electrical Manufacturing & Coil Winding,1994, gemessen.

### Beispiel 2:

Analog zu Beispiel 1 wird ein modifiziertes Epoxidharz hergestellt aus 44,78 g der gemäss Beispiel B hergestellten wässrigen Emulsion und 108 g Bisphenol A-diglycidylether mit einem Epoxidgehalt von 5,4 Äquivalenten/kg. Aus dem modifizierten Epoxidharz, das eine Viscosität (Brookfield) bei 40°C von 2500 mPa·s aufweist, wird eine Giessharzmasse durch Zusammenmischen folgender Komponenten formuliert:

| | |
|---|---|
| Modifiziertes Epoxidharz gemäss Beispiel 2 | 75 g |
| Melm | 0,02 g |
| Millisil QM W12 | 123,8g |
| Phenyldibenzylsulfoniumhexafluoroantimonat (15 gew.-%ige Lösung in Dibutylphthalat) | 7,5 g |
| Byk® A500 | 2 Tropfen |

Verarbeitung analog Beispiel 1.

| | | |
|---|---|---|
| **Biegeversuch:** | E-Modul (MPa) | 8161 |
| | σ-Bruch (MPa) | 98 |
| **Double Torsion:** | G1c (J/m2) | 360 |
| | K1c (MPa•m^{1/2}) | 1,80 |

### Beispiel 3 (Vergleich):

Analog zu Beispiel 1 wird ein modifiziertes Epoxidharz aus 78,57 g der gemäss Beispiel C hergestellten wässrigen Emulsion und 198 g Hexahydrophhtalsäurediglycidylester mit einem Epoxidgehalt von 6,04 Äquivalenten/kg hergestellt. Aus dem modifizierten Epoxidharz, das eine Viscosität (Brookfield) bei 40°C von 4800 mPa·s aufweist, wird eine Giessharzmasse durch Zusammenmischen folgender Komponenten formuliert:

| | |
|---|---|
| Modifiziertes Epoxidharz gemäss Beispiel 3 | 50 g |
| Mischung aus 70 Teilen Hexahydrophthalsäureanhydrid und 30 Teilen Methylhexahydrophthalsäureanhydrid | 45 g |
| BDMA | 0,25 g |
| Millisil QM W12 EST | 145 g |

Verarbeitung analog Beispiel 1 mit folgendem Härtungszyklus: 2 h bei 100°C und anschliessend 10 h bei 140°C.

| | | |
|---|---|---|
| **Biegeversuch:** | E-Modul (MPa) | 10033 |
| | σ-Bruch (MPa) | 149 |
| **Double Torsion:** | G1c (J/m²) | 656 |
| | K1c c (MPa•m^{1/2}) | 2,69 |

### Beispiel 4 (Vergleich):

Analog zu Beispiel 1 wird ein modifiziertes Epoxidharz aus 75,19 g der gemäss Beispiel D hergestellten wässrigen Emulsion und 180 g Bisphenol A-diglycidylether mit einem Epoxidgehalt von 5,4 Äquivalenten/kg hergestellt. Aus dem modifizierten Epoxidharz, das eine Viscosität (Brookfield) bei 40°C von 2900 mPa·s aufweist, wird eine Giessharzmasse durch Zusammenmischen folgender Komponenten formuliert:

| | |
|---|---|
| Modifiziertes Epoxidharz gemäss Beispiel 4 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8413 |
| | σ-Bruch (MPa) | 91 |
| **Double Torsion:** | G1c (J/m²) | 350 |
| | K1c (MPa•m^{1/2}) | 1,80 |

### Beispiel 5 (Vergleich):

Analog zu Beispiel 1 wird ein modifiziertes Epoxidharz aus 69,93 g der gemäss Beispiel E hergestellten wässrigen Emulsion und 180 g Bisphenol A-diglycidylether mit einem Epoxidgehalt von 5,4 Äquivalenten/kg hergestellt. Aus dem modifizierten Epoxidharz, das eine Viscosität (Brookfield) bei 40°C von 2500 mPa·s aufweist, wird eine Giessharzmasse durch Zusammenmischen folgender Komponenten formuliert:

| | |
|---|---|
| Modifiziertes Epoxyharz gemäss Beispiel 5. | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8538 |
| | σ-Bruch (MPa) | 100 |
| **Double Torsion:** | G1c (J/m²) | 324 |
| | K1c (MPa•m^{1/2}) | 1,74 |

### Beispiel 6:

Analog zu Beispiel 1 wird ein modifiziertes Epoxidharz aus 75,47 g der gemäss Beispiel F hergestellten wässrigen Emulsion und 180 g Bisphenol A-diglycidylether mit einem Epoxidgehalt von 5,4 Äquivalenten/kg hergestellt. Aus dem modifizierten Epoxidharz, das eine Viscosität (Brookfield) bei 40°C von 2370 mPa·s aufweist, wird eine Giessharzmasse durch Zusammenmischen folgender Komponenten formuliert:

### Beispiel 6A:

Formulierung einer Giessharzmasse analog Beispiel 1 aus:

| | |
|---|---|
| Modifiziertes Epoxidharz gemäss Beispiel 6 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8076 |
| | σ-Bruch (MPa) | 90 |
| **Double Torsion:** | G1c (J/m²) | 370 |
| | K1c (MPa•m^{1/2}) | 1,81 |

### Beispiel 6B:

Formulierung einer Giessharzmasse analog Beispiel 1 aus:

| | |
|---|---|
| Modifiziertes Epoxidharz gemäss Beispiel 6. | 50 g |
| Mischung aus 11 Teilen carboxylgruppenterminierter Ester aus 2 Mol Tetrahydrophthalsäureanhydrid und 1 Mol Neopentylglykol und 89 Teilen Methylhexahydrophthalsäureanhydrid | 43,4 g |
| Melm | 0,13 g |
| Millisil QM W12 | 140 g |

Verarbeitung analog Beispiel 1 mit dem folgenden Härtungszyklus: 2 h bei 100°C, 10 h bei 140°C und anschliessend 2 h bei 160°C.

| | | |
|---|---|---|
| **Biegeversuch:** | E-Modul (MPa) | 8532 |
| | σ-Bruch (MPa) | 119 |
| **Double Torsion:** | G1c (J/m²) | 498 |
| | K1c (MPa•m^{1/2}) | 2,16 |

### Beispiel 7:

Analog zu Beispiel 1 wird ein modifiziertes Epoxidharz aus 49,68 g der gemäss Beispiel F hergestellten wässrigen Emulsion und 118,5 g eines flüssigen Epoxidharzgemisches mit einem Epoxidgehalt von 5,1 Äquivalenten/kg, wobei das Epoxidharzgemisch durch Mischen von 91 Gew.-Teilen Bisphenol A-diglycidylether und 9 Gew.-Teilen Polypropylenglykol(400)-diglycidylether erhalten wird, hergestellt. Aus dem modifizierten Epoxidharz, das eine Viscosität (Brookfield) bei 25°C von 10000 mPa·s aufweist, wird eine Giessharzmasse durch Zusammenmischen folgender Komponenten formuliert:

| | |
|---|---|
| Modifiziertes Epoxidharz gemäss Beispiel 7 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8178 |
| | σ-Bruch (MPa) | 109 |
| **Double Torsion:** | G1c (J/m²) | 581 |
| | K1c (MPa•m^{1/2}) | 2,29 |

### Beispiel 8:

Analog zu Beispiel 1 wird ein modifiziertes Epoxidharz aus 37,31 g der gemäss Beispiel B hergestellten wässrigen Emulsion und 90 g eines flüssigen Epoxidharzgemisches mit einem Epoxidgehalt von 5,3 Äquivalenten/kg, wobei das Epoxidharzgemisch durch Mischen von 90 g Bisphenol A- und Bisphenol F-diglycidylether mit einem Epoxidgehalt von 5,65 Äquivalenten/kg und 10 g Polypropylenglykol (425) erhalten wird, hergestellt. Aus dem modifizierten Epoxidharz, das eine Viscosität (Brookfield) bei 25°C von 5290 mPa·s aufweist, wird eine Giessharzmasse durch Zusammenmischen folgender Komponenten formuliert:

| | |
|---|---|
| Modifiziertes Epoxidharz gemäss Beispiel 8 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8562 |
| | σ-Bruch (MPa) | 105 |
| **Double Torsion:** | G1c (J/m²) | 485 |
| | K1c (MPa•m^{1/2}) | 2,14 |

### Beispiel 9:

Analog zu Beispiel 1 wird ein modifiziertes Epoxidharz mit 37,74 g der gemäss Beispiel F hergestellten wässrigen Emulsion und 90 g eines flüssigen Epoxidharzgemisches aus Bisphenol A- und Bisphenol F-diglycidylether mit einem Epoxidgehalt von 5,3 Äquivlenten/kg hergestellt. Aus dem modifizierten Epoxidharz, das eine Viscosität (Brookfield) bei 25°C von 6050 mPa·s aufweist, wird eine Giessharzmasse durch Zusammenmischen folgender Komponenten formuliert:

| | |
|---|---|
| Modifiziertes Epoxidharz gemäss Beispiel 9 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8301 |
| | σ-Bruch (MPa) | 104 |
| **Double Torsion:** | G1c (J/m²) | 685 |
| | K1c (MPa•m^{1/2}) | 2,50 |

### Beispiel 10:

Analog zu Beispiel 1 wird ein modifiziertes Epoxidharz mit 87,81 g der gemäss Beispiel G hergestellten wässrigen Emulsion und 220,5 g eines flüssigen Epoxidharzgemisches aus Bisphenol A- und Bisphenol F-diglycidylether mit einem Epoxidgehalt von 5,3 Äquivlenten/kg hergestellt. Aus dem modifizierten Epoxidharz, das eine Viscosität (Brookfield) bei 25°C von 6280 mPa·s aufweist, wird eine Giessharzmasse durch Zusammenmischen folgender Komponenten formuliert:

| | |
|---|---|
| Modifiziertes Epoxidharz gemäss Beispiel 10 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8322 |
| | σ-Bruch (MPa) | 110 |
| **Double Torsion:** | G1c (J/m²) | 857 |
| | K1c (MPa•m^{1/2}) | 2,80 |

### Beispiel 11:

Analog zu Beispiel 1 wird ein modifiziertes Epoxidharz aus 37,31 g der gemäss Beispiel B hergestellten wässrigen Emulsion und 90 g Hexahydrophthalsäurediglycidylester mit einem Epoxygehalt von 6,04 Äquivalenten/kg hergestellt. Aus dem modifizierten Epoxidharz, das eine Viscosität (Brookfield) bei 25°C von 1380 mPa·s aufweist, wird eine Giessharzmasse durch Zusammenmischen folgender Komponenten formuliert:

| | |
|---|---|
| Modifiziertes Epoxidharz gemäss Beispiel 11 | 50 g |
| Mischung aus 70 Teilen Hexahydrophthalsäureanhydrid und 30 Teilen Methylhexahydrophthalsäureanhydrid | 45 g |
| BDMA | 0,25 g |
| Millisil QM W12 EST | 140 g |

Verarbeitung analog Beispiel 1 mit dem folgenden Härtungszyklus: 2 h bei 100°C und anschliessend 10 h bei 140°C.

| | | |
|---|---|---|
| **Biegeversuch:** | E-Modul (MPa) | 9831 |
| | σ-Bruch (MPa) | 151 |
| **Double Torsion:** | G1c (J/m²) | 671 |
| | K1c (MPa•m^{1/2}) | 2,69 |

### Beispiel 12:

Analog zu Beispiel 1 wird ein modifiziertes Epoxidharz aus 37,31 g der gemäss Beispiel B hergestellten wässrigen Emulsion und 90 g eines flüssigen Epoxidharzes aus Bisphenol A- und Bisphenol F-diglycidylether mit einem Epoxidgehalt von 5,78 Äquivalenten/kg hergestellt. Aus dem modifizierten Epoxidharz, das eine Viscosität (Brookfield) bei 25°C von 1540 mPa·s aufweist, wird eine Giessharzmasse durch Zusammenmischen folgender Komponenten formuliert:

| | |
|---|---|
| Modifiziertes Epoxidharz gemäss Beispiel 12 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8799 |
| | σ-Bruch (MPa) | 101 |
| **Double Torsion** | G1c (J/m²) | 398 |
| | K1c (MPa•m^{1/2}) | 1,96 |

### Beispiel 13:

1648 g der gemäss Beispiel G herstellten wässrigen Emulsion mit einem Festkörpergehalt von 27,3 Gew.-% werden zu 1800 g 3,4-Epoxycyclohexyl-3',4'-epoxycyclohexancarboxylat zugegeben und mittels mechanischem Rührer zusammengemischt. Das im Gemisch enthaltene Wasser wird im Vakuum bei 70°C (Badtemperatur) abdestilliert. Das restliche Wasser wird im Hochvakuum entfernt. Aus dem erhaltenen modifizierten Epoxidharz mit einer Viskosität (Brookfield) bei 40°C von 2190 mPa.s wird eine Giessharzmasse durch Zusammenmischen folgender Komponenten formuliert:

### Beispiel 13A:

Formulierung einer Giessharzmasse analog Beispiel 1 aus:

| | |
|---|---|
| Modifiziertes Epoxyharz gemäss Beispiel 13 | 37,5 g |
| Hexahydrophthalsäurediglycidylester (Epoxidgehalt = 6,04 Äquivalente/kg) | 37,5 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 9030 |
| | σ-Bruch (MPa) | 106 |
| **Double Torsion:** | G1c (J/m²) | 490 |
| | K1c (MPa•m^{1/2}) | 2,21 |

### Beispiel 13B:

Formulierung einer Giessharzmasse analog Beispiel 1 aus:

| | |
|---|---|
| Modifiziertes Epoxyharz gemäss Beispiel 13 | 33,02 g |
| Hexahydrophthalsäurediglycidylester (Epoxidgehalt = 6,04 Äquivalente/kg) | 33,02 g |
| Millisil QM W12 | 130 g |
| N-Benzylquinoliniumhexafluoroantimonat | 2,18 g |
| Benzopinakol | 1,78 g |

Verarbeitung analog Beispiel 1 mit dem folgenden Härtungszyklus: 1 h bei 120°C und anschliessend 2 h bei 140°C.

| | | |
|---|---|---|
| **Biegeversuch:** | E-Modul (MPa) | 11175 |
| | σ-Bruch (MPa) | 142 |
| **Double Torsion:** | G1c (J/m²) | 442 |
| | K1c (MPa•m^{1/2}) | 2,33 |

### Beispiel 14:

Analog zu Beispiel 1 wird ein modifiziertes Epoxidharz hergestellt aus 88,34 g der gemäss Beispiel H hergestellten wässrigen Emulsion und 225 g Bisphenol A-diglycidylether mit einem Epoxidgehalt von 5,4 Äquivalenten/kg. Aus dem modifizierten Epoxidharz, das eine Viskosität (Brookfield) bei 40°C von 3090 mPa.s aufweist, wird eine Giessharzmasse durch Zusammenmischen folgender Komponenten formuliert:

### Beispiel 14A:

Formulierung einer Giessharzmasse analog Beispiel 1 aus:

| | |
|---|---|
| Modifiziertes Epoxyharz gemäss Beispiel 14 | 75 g |
| Millisil QM W12 | 123,8 g |
| Phenyldibenzylsulfoniumhexafluoroantimonat (15 gew.-%ige Lösung in Dibutylphthalat) | 7,5 g |
| Byk A500 | 2 Tropfen |

Verarbeitung analog Beispiel 1.

| | | |
|---|---|---|
| **Biegeversuch:** | E-Modul (MPa) | 8352 |
| | σ-Bruch (MPa) | 105 |
| **Double Torsion:** | G1c (J/m²) | 405 |
| | K1c (MPa•m^{1/2}) | 1,93 |

### Beispiel 14B:

Formulierung einer Giessharzmasse analog Beispiel 1 aus:

| | |
|---|---|
| Modifiziertes Epoxidharz gemäss Beispiel 14 | 50 g |
| Mischung aus 11 Teilen carboxylgruppenterminierter Ester aus 2 Mol Tetrahydrophthalanhydrid und 1 Mol Neopentylglykol und 89 Teilen Methylhexahydrophthalsäureanhydrid | 43,4 g |
| Melm | 0,13 g |
| Millisil QM W12 | 140 g |
| Byk A500 | 2 Tropfen |

Verarbeitung analog Beispiel 1 mit dem folgenden Härtungszyklus: 2 h bei 120°C , 10 h bei 140°C und anschliessend 2 h bei 160°C.

| | | |
|---|---|---|
| **Biegeversuch:** | E-Modul (MPa) | 8723 |
| | σ-Bruch (MPa) | 121 |
| **Double Torsion:** | G1c (J/m²) | 551 |
| | K1c (MPa•m^{1/2}) | 2,3 |

### Beispiel 15:

Analog zu Beispiel 1 wird ein modifiziertes Epoxidharz hergestellt aus 66,6 g der gemäss Beispiel I herstellten wässrigen Emulsion und 225 g Bisphenol A-diglycidylether mit einem Epoxidgehalt von 5,4 Äquivalenten/kg. Aus dem modifizierten Epoxidharz, das eine Viskosität (Brookfield) bei 40°C von 3410 mPa.s aufweist, wird eine Giessharzmasse durch Zusammenmischen folgender Komponenten formuliert:

| | |
|---|---|
| Modifiziertes Epoxyharz gemäss Beispiel 15 | 50 g |
| Mischung aus 11 Teilen Carboxygruppenterminierter Ester aus 2 Mol Tetrahydrophthalsäureanhydrid und 1 Mol Neopentylglykol und 89 Teilen Methylhexahydrophthalsäureanhydrid | 43,4 g |
| Melm | 0,13 g |
| Millisil QM W12 | 140 g |
| Byk A500 | 2 Tropfen |

Verarbeitung analog Beispiel 1 mit dem folgenden Härtungszyklus: 2 h bei 120°C , 10 h bei 140°C und anschliessend 2 h bei 160°C.

| | | |
|---|---|---|
| **Biegeversuch:** | E-Modul (MPa) | 8764 |
| | σ-Bruch (MPa) | 117 |
| **Double Torsion:** | G1c (J/m²) | 498 |
| | K1c (MPa•m^{1/2}) | 2,19 |

### Beispiel 16:

Analog zu Beispiel 1 wird ein modifiziertes Epoxidharz hergestellt aus 65,2 g der gemäss Beispiel J herstellten wässrigen Emulsion und 270 g eines flüssigen Epoxidharzgemisches mit einem Epoxidgehalt von 5,1 Äquivalenten/kg, wobei das Epoxidharzgemisch durch Mischen von 91 Gew.-Teilen Bisphenol A-diglycidylether und 9 Gew.-Teilen Polypropylenglykol(400)-diglycidylether erhalten wird, hergestellt. Aus dem modifizierten Epoxyharz, das eine Viskosität (Brookfield) bei 40°C von 2450 mPa.s aufweist, wird eine Giessharzmasse durch Zusammenmischen folgender Komponenten formuliert:

| | |
|---|---|
| Modifiziertes Epoxidharz gemäss Beispiel 16 | 100 g |
| Silane A137*⁾ | 0,5 g |
| Millisil QM W12 | 156 g |
| Phenyldibenzylsulfoniumhexafluoroantimonat (15 gew.-%ige Lösung in Dibutylphthalat) | 3,5 g |

| | |
|---|---|
| *⁾ Octyltriethoxysilan der Firma Osi Specialties | |

Verarbeitung analog Beispiel 1.

| | | |
|---|---|---|
| **Biegeversuch:** | E-Modul (MPa) | 8280 |
| | σ-Bruch (MPa) | 100 |
| **Double Torsion:** | G1c (J/m²) | 408 |
| | K1c (MPa•m^{1/2}) | 1,93 |

### Beispiel 17:

990 g eines festen Epoxidharzes aus Bisphenol A-diglycidylether mit einem Epoxidgehalt von 1,7 Äquivalenten/kg wird bei 150°C (Aussentemperatur) geschmolzen. 393 g der gemäss Beispiel K herstellten wässerigen Emulsion werden zugegeben und mittels eines Rührers zusammengemischt. Wasser wird unter Leichtvakuum abdestilliert. Anschlissend wird das restliche Wasser im Hochvakuum bei 170°C entfernt. Aus dem modifizierten Epoxyharz wird eine Giessharzmasse durch Mahlen folgender Komponenten formuliert:

| | |
|---|---|
| Modifiziertes Epoxyharz gemäss Beispiel 17 | 33,8 g |
| Phthalsäureanhydrid | 6,2 g |
| Millisil QM W12 | 60 g |

Das Gemisch, das eine Viskosität von 100000 mPa.s bei 120°C aufweist, wird bei 160°C geschmolzen und in eine Form bei 160°C gepresst. Die Härtung erfolgt während 10 h bei 140°C.

| | | |
|---|---|---|
| **Biegeversuch:** | E-Modul (MPa) | 8704 |
| | σ-Bruch (MPa) | 141 |
| **Double Torsion:** | G1c (J/m²) | 1432 |
| | K1c (MPa•m^{1/2}) | 3,7 |

### Beispiel 18:

20 g des gemäss Beispiel K sprühgetrockneten Core-Shell Pulvers wird zu 180 g Bisphenol A-diglycidylether mit einem Epoxidgehalt von 5,4 Äquivaleten/kg zugegeben und mittels Dispermat mit Glaskugeln bei 2000 U/min während 30 min dispergiert. Aus dem modifizierten Epoxidharz, das eine Viskosität (Brookfield) bei 40°C von 5600 mPa.s aufweist, wird eine Giessharzmasse durch Zusammenmischen folgender Komponenten formuliert:

| | |
|---|---|
| Modifiziertes Epoxidharz gemäss Beispiel 18 | 50 g |
| Mischung aus 11 Teilen carboxylgruppenterminierter Ester aus 2 Mol Tetrahydrophthalsäureanhydrid und 1 Mol Neopentylglykol und 89 Teilen Methylhexahydrophthalsäureanhydrid | 43,4 g |
| Melm | 0,13 g |
| Millisil QM W12 | 140 g |

Verarbeitung analog Beispiel 1 mit dem folgenden Härtungszyklus: 2 h bei 120°C, 10 h bei 140°C und anschliessend 2 h bei 160°C.

| | | |
|---|---|---|
| **Biegeversuch:** | E-Modul (MPa) | 8456 |
| | σ-Bruch (MPa) | 112 |
| **Double Torsion:** | G1c (J/m²) | 479 |
| | K1c (MPa•m^{1/2}) | 2,1 |

### Beispiel 19:

Formulierung zur Herstellung eines zähmodifizierten Epoxidgiessharzkörpers 180 g eines festen Bisphenol A-diglycidylethers mit einem Epoxidgehalt von 2,3 Äquivalenten/kg werden bei 160°C geschmolzen. 71,43 g der gemäss Beispel K hergestellten wässrigen Emulsion werden zugegeben und mittels eines Rührers zusammengemischt. Wasser wird unter Leichtvakuum abdestilliert. Anschliessend wird das restliche Wasser im Hochvakuum entfernt. Aus dem auf diese Weise modifizierten Epoxidharz wird die folgende Harzkomponente in einem Draismischer bei 140°C hergestellt und anschliessend auf etwa 100°C abgekühlt.

| | |
|---|---|
| Modifiziertes Epoxidharz gemäss Beispiel 19 | 167,17 g |
| Silan A 187 *⁾ | 0,75 g |
| Farbpaste DW 07 **⁾ | 0,3 g |
| Bayferrox Rot ***⁾ | 0,45 g |
| Vetrotex 1320 ****⁾ | 45,18 g |
| Millisil QZ 300 *****⁾ | 286,15 g |

| | |
|---|---|
| *⁾ Glycidyloxypropyltrimethoxysilan der Firma Osi Specialities | |
| **⁾ Farbpaste der Ciba-Geigy AG | |
| ***⁾ Eisenoxid der Bayer AG | |
| ****⁾ Glasfaser der Vetrotex Ltd. | |
| *****⁾ Quarzmehl der Quarzwerke AG | |

300 g der oben angegebenen Harzkomponente werden mit 45 g einer bei 100°C geschmolzenen Härterkomponente, bestehend aus
34,0 g Phthalsäureanhydrid
63,1 g Tetrahydrophthalsäureanhydrid und
2,9 g eines Reaktionsproduktes aus 1 Mol Phthalsäureanhydrid, 1 Mol N-Butylamin und 1 Mol Morpholin,
bei 100°C gemischt, kurz entgast und in eine auf 170°C geheizte Form der Abmessung 13,5 x 13,5 x 0,4 cm gegossen. Die Härtung erfolgt während 0,5 h bei 170°C und anschliessend 6 h bei 135°C. An der Formplatte werden folgende Eigenschaften gemesssen:

| | | |
|---|---|---|
| **Biegeversuch:** | E-Modul (MPa) | 9319 |
| | δ-Bruch (MPa) | 153 |
| **Double Torsion:** | G1c(J/m²) | 1117 |
| | K1c(MPa•m^{1/2} | 3,4 |

## Patentansprüche

1. Core/Shell-Partikel aus einem Kern (Core), bestehend aus einem Elastomeren mit einem T_{G}-Wert von < 0°C, auf den eine Schale (Shell) aus einem vernetzten Copolymer enthaltend mindestens ein von Polyethylenglykol oder Polypropylenglykol abgeleitetes (Meth)acrylat der Formel I 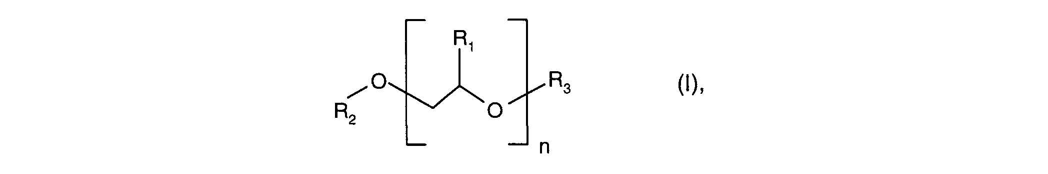 worin entweder R₂ oder R₃ für den Rest 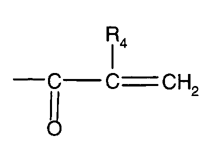 steht und der andere Rest -H oder ein Alkyl bedeutet, R₁ oder R₄ je für -H, -CH₃ oder -C₂ H₅ stehen und n eine Zahl von 2 bis 30 bedeutet,
aufgepfropft ist, wobei der Anteil der Vernetzungskomponente im Copolymer der Schale mehr als 5 und höchstens 90 Gew.-%, bezogen auf die gesamte Menge der Comonomeren des Schalencopolymers, beträgt.

2. Core/Shell-Partikel gemäss Anspruch 1, worin der Kern aus einem vernetzten Elastomeren mit einem T_{G}-wert von < -10°C besteht.

3. Core/Shell-Partikel gemäss Anspruch 1, worin der Kern aus einem Polybutadien oder Poly(meth)acrylat besteht.

4. Core/Shell-Partikel gemäss Anspruch 1, worin die Menge des Kerns, bezogen auf die Core/Shell-Partikel, 10-90 Gew.-%, vorzugsweise 20-80 Gew.-%, beträgt.

5. Core/Shell-Partikel gemäss Anspruch 1, worin die Schale aus einem vernetzten Copolymer besteht, das die Di(meth)acrylate von Ethylenglykol, Propylenglykol, Butylenglykol oder deren höheren Homologe mit bis zu 30 wiederkehrenden Struktureinheiten der Formel 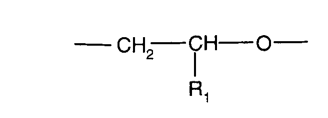 im Molekül, worin R¹ für -H, -CH₃ oder -C₂H₅ steht, oder 1,1,1-Trimethylolpropan-tri(meth)acrylat, Bisphenol A-diglycidylether-di(meth)acrylat oder Methacrylsäureallylester als Vernetzungskomponente enthält.

6. Core/Shell-Partikel gemäss Anspruch 1, worin der Anteil der Vernetzungskomponente im Copolymer der Schale 6-60 Gew.-%, bezogen auf die gesamte Menge der Comonomeren des Schalenpolymers, beträgt.

7. Epoxidharzzusammensetzungen, enthaltend
(a) ein Epoxidharz oder Epoxidharzgemisch mit durchschnittlich mehr als einer 1,2-Epoxidgruppe im Molekül,
(b) Core/Shell-Partikel gemäß Anspruch 1 und
(c) ein Härtungsmittel oder einen Härtungskatalysator für die Epoxidharzkomponente (a).

8. Epoxidharzzusammensetzungen gemäss Anspruch 7, enthaltend als Epoxidharz (a) einen flüssigen oder festen Polyglycidylether oder -ester.

9. Epoxidharzzusammensetzungen gemäss Anspruch 7, enthaltend Core/Shell-Partikel (b), worin der Kern aus einem vernetzten Elastomeren mit einem T_{G}-wert von < -10°C besteht.

10. Epoxidharzzusammensetzungen gemäss Anspruch 7, enthaltend Core/Shell-Partikel (b), worin der Kern aus einem Polybutadien oder Poly(meth)acrylat besteht.

11. Epoxidharzzusammensetzungen gemäss Anspruch 7, enthaltend Core/Shell-Partikel (b), worin die Schale aus einem vernetzen Copolymer auf der Basis von Vinylmonomeren, die funktionelle Gruppen enthalten können, und auf der Basis von polyfunktionellen (Meth)acrylsäurestern aliphatischer Polyole, Bisphenoldiglycidylether-di(meth)acrylaten, Di(meth)acrylaten von ethoxylierten Bisphenolen, Additionsprodukte von (Meth)acrylsäure an von Bisphenoldiglycidylethern verschiedenen Di- oder Polyepoxidverbindungen, von (Meth)acrylsäureallylester oder Divinylbenzol als Vernetzungskomponente und Comonomer besteht.

12. Epoxidharzzusammensetzungen gemäss Anspruch 7, enthaltend Core/Shell-Partikel (b), worin die Schale aus einem vernetzten Copolymer auf der Basis von Di(meth)acrylaten von Ethylenglykol oder Propylenglykol oder deren höheren Homologe mit bis zu 30 wiederkehrenden Struktureinheiten der Formel 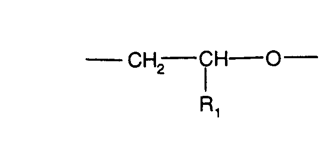 im Molekül, worin R¹ für -H, -CH₃ oder -C₂H₅ steht, oder 1,1,1-Trimethylolpropan-tri(meth)acrylat, Bisphenol A-diglycidylether-di(meth)acrylat oder Methacrylsäureallylester als Vernetzungskomponente besteht.

13. Epoxidharzzusammensetzungen gemäss Anspruch 7, enthaltend Core/Shell-Partikel in Mengen von 1-50 Gew.%, bezogen auf den gesamten Anteil der Komponenten (a), (b) und (c).

14. Epoxidharzzusammensetzungen gemäss Anspruch 7, enthaltend als Komponente (c) eine Polycarbonsäure oder deren Anhydrid, ein Polyamin, Dicyandiamid oder ein katalytisch härtendes Härtungsmittel.

15. Umhüllungssysteme oder Beschichtungsmassen, enthaltend
(a) ein Epoxidharz oder Epoxidharzgemisch mit durchschnittlich mehr als einer 1,2-Epoxidgruppe im Molekül,
(b) Core/Shell-Partikel gemäß Anspruch 1,
(c) ein Härtungsmittel oder einen Härtungskatalysator für die Epoxidharzkomponente (a) und
(d) mindestens einen in der Epoxidharztechnik gebräuchlichen mineralischen Füllstoff.

16. Epoxidgiessharzmassen, enthaltend
(a) ein Epoxidharz oder Epoxidharzgemisch mit durchschnittlich mehr als einer 1,2-Epoxidgruppe im Molekül,
(b) Core/Shell-Partikel gemäß Anspruch 1,
(c) ein Härtungsmittel oder einen Härtungskatalysator für die Epoxidharzkomponente (a) und
(d) mindestens einen in der Epoxidgiessharztechnik gebräulichen mineralischen Füllstoff.

17. Die aus den Epoxidharzzusammensetzungen gemäss Anspruch 7 durch Härtung hergestellten Formstoffe, Beschichtungen oder Verklebungen.

## Claims

1. Core/shell particles comprising a core comprising an elastomer having a T_{G} value of < 0°C onto which a shell of a crosslinked copolymer comprising at least one (meth)acrylate derived from polyethylene glycol or polypropylene glycol, of the formula I 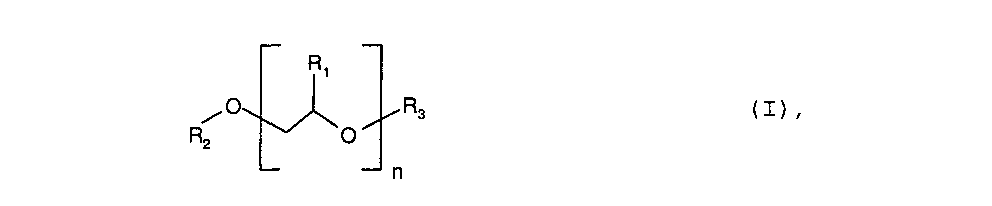 in which either R₂ or R₃ is the radical 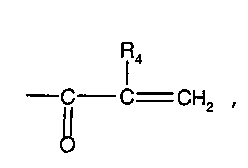 and the other radical is -H or alkyl, R₁ and R₄ are each -H, -CH₃ or -C₂ H₅, and n is a number from 2 to 30, is grafted, where the proportion of the crosslinking component in the copolymer of the shell is from 5 to 90 % by weight, based on the total amount of the comonomers in the shell copolymer.

2. Core/shell particles according to claim 1, in which the core comprises a crosslinked elastomer having a T_{G} value of < -10°C.

3. Core/shell particles according to claim 1, in which the core comprises a polybutadiene or poly(meth)acrylate.

4. Core/shell particles according to claim 1, in which the amount of the core, based on the core/shell particles, is 10-90 % by weight, preferably 20-80 % by weight.

5. Core/shell particles according to claim 1, in which the shell comprises a crosslinked copolymer in which the crosslinking component is a di(meth)acrylate of ethylene glycol, propylene glycol, butylene glycol or a higher homologue thereof having up to 30 recurring structural units of the formula 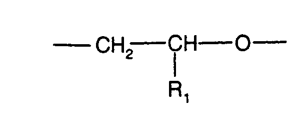 in the molecule, in which R¹ is -H, -CH₃, or -C₂H₅ , or
1,1,1-trimethylolpropane tri(meth)acrylate, bisphenol A diglycidyl ether di(meth)acrylate or allyl methacrylate.

6. Core/shell particles according to claim 1, in which the proportion of the crosslinking component in the copolymer of the shell is 6-60 % by weight, based on the total amount of the comonomers in the shell polymer.

7. An epoxy resin composition comprising
(a) an epoxy resin or epoxy resin mixture containing on average more than one 1,2-epoxide group in the molecule,
(b) core/shell particles according to claim 1, and
(c) a curing agent or a curing catalyst for the epoxy resin component (a).

8. An epoxy resin composition according to claim 7, wherein the epoxy resin (a) is a liquid or solid polyglycidyl ether or ester.

9. An epoxy resin composition according to claim 7, comprising core/shell particles (b) in which the core comprises a crosslinked elastomer having a T_{G} value of < -10°C.

10. An epoxy resin composition according to claim 7, comprising core/shell particles (b) in which the core comprises a polybutadiene or poly(meth)acrylate.

11. An epoxy resin composition according to claim 7, comprising core/shell particles (b) in which the shell comprises a crosslinked copolymer based on vinyl monomers, which can contain functional groups, and based on polyfunctional (meth)acrylates of aliphatical polyols, bisphenol diglycidyl ether di(meth)acrylates, di(meth)acrylates of ethoxylated bisphenols, products of the addition reaction of (meth)acrylic acid with di- or polyepoxide compounds other than bisphenol diglycidyl ethers, or based on allyl (meth)acrylate or divinylbenzene as crosslinking component and comonomer.

12. An epoxy resin composition according to claim 7, comprising core/shell particles (b) in which the shell comprises a crosslinked copolymer in which the crosslinking component is a di(meth)acrylate of ethylene glycol or propylene glycol or a higher homologue thereof having up to 30 recurring structural units of the formula 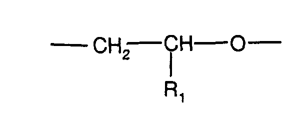 in the molecule, in which R¹ is -H, -CH₃, or -C₂H₅ , or
1,1,1-trimethylolpropane tri(meth)acrylate, bisphenol A diglycidyl ether di(meth)acrylate or allyl methacrylate.

13. An epoxy resin composition according to claim 7, comprising core/shell particles in amounts of 1-50 % by weight, based on the total amount of components (a), (b) and (c) .

14. An epoxy resin composition according to claim 7, wherein component (c) is a polycarboxylic acid or anhydride, a polyamine, dicyandiamide or a catalytically acting curing agent.

15. An encapsulation system or coating composition, comprising
(a) an epoxy resin or epoxy resin mixture containing on average more than one 1,2-epoxide group in the molecule,
(b) core shell particles according to claim 1,
(c) a curing agent or a curing catalyst for the epoxy resin component (a), and
(d) at least one mineral filler customarily used in epoxy resin technology.

16. An epoxy casting resin composition, comprising
(a) an epoxy resin or epoxy resin mixture containing on average more than one 1,2-epoxide group in the molecule,
(b) core shell particles according to claim 1,
(c) a curing agent or a curing catalyst for the epoxy resin component (a), and
(d) at least one mineral filler customarily used in epoxy casting resin technology.

17. A moulded material, coating or adhesive bond system produced from an epoxy resin composition according to claim 7 by curing.

## Revendications

1. Particule à structure core-shell composée d'un noyau (core), constitué d'un élastomère avec une valeur de Tv de < 0°C, sur lequel est appliqué par greffage une peau (shell) d'un copolymère réticulé contenant au moins un (méth)acrylate dérivé de polyéthylèneglycol ou de polypropylèneglycol de formule I 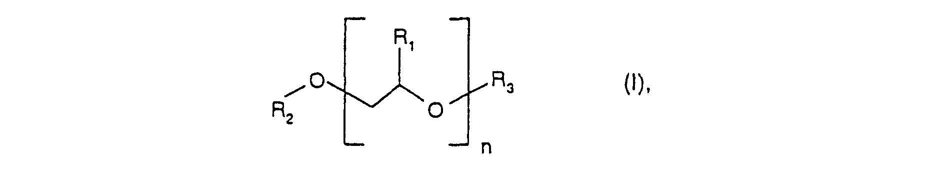 dans laquelle R₂ ou R₃ représente le groupe 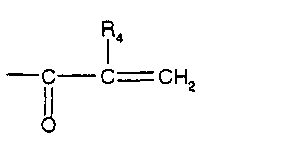 et l'autre groupe -H ou un alkyle, R₁ ou R₄ représente respectivement -H, -CH₃ ou -C₂H₅ et n un nombre de 2 à 30, dans laquelle la proportion du composant de réticulation dans le copolymère de la peau se monte à plus de 5 et au plus à 90 % en poids, par rapport à la quantité totale des comonomères du copolymère de la peau.

2. Particule à structure core-shell selon la revendication 1, dans laquelle le noyau est constitué d'un élastomère réticulé avec une valeur de Tv de < -10°C.

3. Particule à structure core-shell selon la revendication 1, dans laquelle le noyau est constitué d'un polybutadiène ou de poly(méth)acrylate.

4. Particule à structure core-shell selon la revendication 1, dans laquelle la quantité des noyaux, par rapport à la particule core-shell, s'élève de préférence à entre 20 et 80 % en poids.

5. Particule à structure core-shell selon la revendication 1, dans laquelle la peau est constituée d'un copolymère réticulé, qui contient comme composant de réticulation les di(méth)acrylates d'éthylèneglycol, de propylèneglycol, de butylèneglycol ou leur homologues supérieurs avec jusqu'à 30 motifs de structure répétés de formule 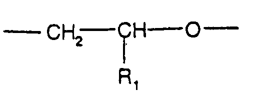 dans la molécule, dans laquelle R₁ représente -H, -CH₃ ou -C₂H₅, ou le tri(méth)acrylate de 1,1,1-triméthylolpropane, l'éther diglycidylique de bisphénol A-di(méth)acrylate ou le méthacrylate d'allyle.

6. Particule à structure core-shell selon la revendication 1, dans laquelle la proportion des composants de réticulation dans le copolymère de la peau s'élève à entre 6 et 60 % en poids, par rapport à la quantité globale des comonomères du polymère de peau.

7. Compositions de résines époxyde, contenant :
(a) une résine époxyde ou un mélange de résines époxyde avec en moyenne plus d'un groupe 1,2-époxyde dans la molécule,
(b) des particules core-shell selon la revendication 1 et
(c) un durcisseur ou un catalyseur de durcissement pour le composant (a) de résine époxyde.

8. Compositions de résines époxyde selon la revendication 7, contenant comme résine époxyde (a) un polyéther ou -ester de glycidyle liquide ou solide.

9. Compositions de résines époxyde selon la revendication 7, contenant des particules core-shell (b), dans lesquelles le noyau est constitué d'un élastomère réticulé avec une valeur de Tv de < -10°C.

10. Compositions de résines époxyde selon la revendication 7, contenant des particules core-shell (b), dans lesquelles le noyau est constitué d'un polybutadiène ou d'un poly(méth)acrylate.

11. Compositions de résines époxyde selon la revendication 7, contenant des particules core-shell (b), dans lesquelles la peau est constituée d'un copolymère réticulé à base de monomères de vinyle, qui peuvent contenir des groupes fonctionnels, et à base de (méth)acrylates polyfonctionnels de polyols aliphatiques, d'éthers diglycidyliques de bisphénol-di(méth)acrylates, de di(méth)acrylates de bisphénols éthoxylés, de produits d'addition d'acide (méth)acrylique sur différents composés di- ou polyépoxyde d'éthers diglycidyliques de bisphénol, de (méth)acrylates d'allyle ou de divinylbenzène comme composant de réticulation et comonomère.

12. Compositions de résines époxyde selon la revendication 7, contenant des particules core-shell (b), dans lesquelles la peau est constituée comme composant de réticulation d'un copolymère réticulé à base de di(méth)acrylates d'éthylèneglycol ou de propylèneglycol ou de leurs homologues supérieurs avec jusqu'à 30 motifs de structure répétés de formule 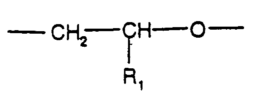 dans la molécule, dans laquelle R₁ représente -H, -CH₃ ou -C₂H₅, ou le tri(méth)acrylate de 1,1,1-triméthylolpropane, l'éther diglycidylique de bisphénol A-di(méth)acrylate ou le méthacrylate d'allyle.

13. Compositions de résines époxyde selon la revendication 7, contenant des particules core-shell en quantités de 1 à 50 % en poids, par rapport à la totalité des composants (a), (b) et (c) .

14. Compositions de résines époxyde selon la revendication 7, contenant comme composant (c) un polyacide carboxylique ou son anhydride, une polyamine, le dicyandiamide ou un durcisseur à action catalytique.

15. Systèmes d'enrobage ou matières de revêtement, contenant
(a) une résine époxyde ou un mélange de résines époxyde avec en moyenne plus d'un groupe 1,2-époxyde dans la molécule,
(b) des particules core-shell selon la revendication 1,
(c) un durcisseur ou un catalyseur de durcissement pour le composant (a) de résine époxyde et
(d) au moins une charge minérale usuelle dans la technique des résines époxyde.

16. Matières à mouler de résine époxyde, contenant :
(a) une résine époxyde ou un mélange de résines époxyde avec en moyenne plus d'un groupe 1,2-époxyde dans la molécule,
(b) des particules core-shell selon la revendication 1,
(c) un durcisseur ou un catalyseur de durcissement pour le composant (a) de résine époxyde et
(d) au moins une charge minérale usuelle dans la technique des résines époxyde.

17. Matières moulées, revêtements ou colles fabriqués par durcissement à partir des compositions de résines époxyde selon la revendication 7.
